# FASCICULE DE BREVET EUROPEEN

(11) **EP 3 852 894 B1**
(45) Date de publication et mention de la délivrance du brevet: **09.11.2022**
(21) Numéro de dépôt: 19801064.7
(22) Date de dépôt: 20.09.2019
(51) Int. Cl.: A63F 13/837, A63F 13/98, A63F 13/285

(54) **SUPPORT DE MANETTE POUR JEUX VIDÉO DE RÉALITÉ VIRTUELLE COMPORTANT UN DISPOSITIF DE RETOUR DE FORCE MECANIQUE**
GAMEPAD-HALTER FÜR VIDEOSPIELE DER VIRTUELLEN REALITÄT MIT EINER MECHANISCHEN KRAFTRÜCKKOPPLUNGSVORRICHTUNG
GAME PAD HOLDER FOR VIRTUAL REALITY VIDEO GAMES, COMPRISING A MECHANICAL FORCE FEEDBACK DEVICE

(30) Priorité: 20.09.2018 FR 1858508
(43) Date de publication de la demande: 28.07.2021
(73) Titulaire: Protubevr, 13002 Marseille (FR)
(72) Inventeur: ARMAND, Romain, 13002 MARSEILLE (FR)
(74) Mandataire: Roman, Alexis
(86) Numéro de dépôt international: PCT/FR2019/052207
(87) Numéro de publication internationale: WO 2020/058649

(56) Documents cités:
- EP-A1- 1 731 869
- EP-A2- 2 796 965
- CN-U- 205 607 244
- JP-A- 2005 331 188
- US-A1- 2011 275 435
- US-A1- 2016 084 605
- US-B1- 9 174 134
- The Protubevr Team: "Kit assembly tutorial", , 6 février 2018 (2018-02-06), XP055537847, Extrait de l'Internet: URL:https://docs.wixstatic.com/ugd/92fad4_ 67798185e84a44eaa4b06cf0e571e0c0.pdf [extrait le 2018-12-21]

## Description

### Domaine technique de l'invention.

L'invention a pour objet un support de manette pour jeux vidéo de réalité virtuelle équipé d'un dispositif de retour de force mécanique conçu pour simuler un impact physique lors d'un événement de jeu.

Elle concerne le domaine technique des accessoires pour jeux vidéo permettant de rendre encore plus immersive les expériences de jeu, en particulier mais non exclusivement pour des jeux de réalité virtuelle tels que des jeux de tir tridimensionnel (3D).

### État de la technique.

En matière de jeu vidéo, certains accessoires (manettes, contrôleurs, joysticks) sont équipés de dispositifs de retour de force. Ces dispositifs simulent un impact physique lors d'un événement de jeu vidéo. Ils peuvent par exemple simuler le recul d'une arme au moment d'une pression de détente lors d'une simulation de tir dans le jeu, ou simuler l'impact d'un objet ou d'une déflagration sur le corps du joueur.

Ces dispositifs de retour de force sont des sources de stimuli permettant à un utilisateur d'avoir la sensation d'être immergé dans l'environnement du jeu vidéo.

Dans un environnement virtuel immersif, des casques de réalité virtuelle permettent à l'utilisateur de s'immerger dans une scène virtuelle d'un jeu vidéo, par exemple, en déplaçant sa tête et son regard, en effectuant certains gestes et en se déplaçant éventuellement dans un rayon limité.

Un casque de réalité virtuelle se présente sous la forme d'un masque recouvrant les yeux de l'utilisateur. Un écran et des lentilles sont placés à quelques centimètres en face des yeux pour afficher des images virtuelles. Divers capteurs permettent de détecter les mouvements de tête et de regard de l'utilisateur, ce qui permet d'adapter en temps réel l'image projetée sur l'écran, afin de produire l'illusion d'une immersion dans la scène restituée. Ces casques sont par exemple commercialisés sous les marques HTC VIVE^{®}, OCULUS RIFT^{®}, LENOVO^{®}, ou SAMSUNG ODYSSEY^{®}.

Dans des jeux de tir 3D, l'image d'une cible ou d'un ennemi affichée sur l'écran du casque doit être touchée par une balle. La visée de la cible et le tir se fait au moyen d'au moins un contrôleur, ou manette, tenue par le joueur. Ces manettes fonctionnent généralement par paire, une dans chaque main de l'utilisateur.

Ces manettes comprennent généralement un joystick ou pavé tactile pour les déplacements du joueur dans l'environnement virtuel, un ou plusieurs boutons et/ou gâchettes permettant de déclencher des actions dans cet environnement et notamment la pose/dépose d'objets, prise de vue, pointage, tir, etc. Différents capteurs de mouvement et/ou de position sont disposés sur une couronne solidaire du manche de la manette. Elles sont par exemple commercialisées par la société OCULUS^{®} sous la marque OCULUS TOUCH^{®} ou par la société VIVE^{®}. Les documents brevets USD780807, US2017262048 ou encore US2016361637 divulguent également ce type de manette.

Les manettes sont suivies dans l'espace au moyen de différents capteurs/émetteurs (disposés sur les manettes et/ou le casque et/ou dans la pièce où se déroule la partie), de sorte que l'utilisateur puisse interagir avec l'environnement virtuel comme avec ses propres mains. Diverses techniques permettent de synchroniser les images projetées sur l'écran du casque avec la position des manettes. Ces techniques ne font pas l'objet de la présente invention et ne seront donc pas décrites ici. Il en est de même pour les techniques de transmission des données entre le casque, les manettes et l'unité centrale permettant la mise en œuvre du jeu vidéo.

La manipulation des manettes durant une partie affecte de manière significative l'expérience du jeu dans la mesure où les joueurs sont tenus de jouer avec vitesse et précision par rapport à une action. Chaque détail qui rappelle au cerveau du joueur qu'il s'agit d'une réalité virtuelle est susceptible d'interférer avec sa sensation d'immersion et son expérience. Si les manettes actuelles permettent de simuler efficacement la tenue d'un objet dans chaque main (par exemple une arme de point, un couteau, un bâton, ...), le résultat n'est pas aussi bon dès qu'il s'agit de simuler la tenue d'un objet qui se prend avec les deux mains (par exemple un fusil d'assaut, une épée, un club de golf, une canne à pêche, ...).

Dans le domaine des jeux de tir, on connait des reproductions complexes et coûteuses de fusils d'assaut telles que celles décrites dans le document brevet EP1900404 ou celles commercialisées sous les marques DELTA SIX^{®} ou STRIKER VR^{®}.

Certaines de ces armes factices intègrent un dispositif de retour de force, par exemple les fusils d'assaut commercialisés par la société VRSENAL^{®} sous la référence VR-15^{®}. Dans ce type de produit, le dispositif de retour de force est intégré dans la crosse du fusil. Un percuteur, mû par un actionneur, vient frapper la paroi interne de la crosse. Le percuteur et son actionneur doivent être conçus pour que cet impact transmette une pression suffisante au joueur pour simuler le recul de l'arme au moment d'une pression de détente. Cette contrainte implique d'utiliser un dispositif de retour de force dont l'encombrement est relativement important et dont le coût est élevé.

Les armes décrites dans les documents brevets JP2005331188, CN205607244 ou US2011/0275435 intègrent un dispositif de retour de force comportant un percuteur, mû par un actionneur, et formant, en usage, un contact physique la zone du corps du joueur. Le percuteur pouvant se déplacer à tout moment, il existe un risque qu'il vienne impacter de manière intempestive le corps du joueur et/ou un autre équipement, notamment un casque de réalité virtuelle.

L'invention vise à remédier aux problèmes techniques précités. En particulier, un objectif de l'invention est de proposer support de manette comportant un dispositif de retour de force qui soit compact et/ou dont l'encombrement est réduit.

Un autre objectif de l'invention est de proposer support de manette comportant un dispositif de retour de force qui soit particulièrement sécurisant pour l'utilisateur.

Encore un autre objectif de l'invention est de proposer support de manette comportant un dispositif de retour de force permettant d'améliorer le ressentie du joueur lors de la simulation d'un impact physique.

Encore un autre objectif de l'invention est de proposer support de manette comportant un dispositif de retour de force dont la conception est simple, peu onéreuse et facile d'utilisation.

### Divulgation de l'invention.

La solution proposée par l'invention est un support de manette pour jeux vidéo de réalité virtuelle, lequel support est adapté pour simuler une arme dans ledit jeu, lequel support est équipé d'un dispositif de retour de force mécanique conçu pour simuler le recul de l'arme au moment d'une pression de détente lors d'un événement de jeu,
- le dispositif de retour de force comporte :
   o un boîtier qui, en usage, est en contact physique avec une zone du corps du joueur, lequel boîtier se présente sous la forme d'une crosse conformée pour être épaulée par un joueur,
   ∘ un percuteur formant, en usage, un contact physique avec la zone du corps du joueur,
et dans lequel :
- le percuteur est monté mobile dans le boîtier entre :
   ∘ une position de repli et,
   ∘ une position avancée où ledit percuteur fait saillie dudit boîtier pour, en usage, venir impacter la zone du corps du joueur,
- un élément ressort est agencé pour maintenir le percuteur en position avancée lorsque le boîtier n'est pas en contact physique avec la zone du corps du joueur,
- un actionneur est agencé pour déplacer le percuteur entre la position de repli et la position avancée,
- une unité de gestion électronique est adaptée pour recevoir des signaux et, en réponse à la réception desdits signaux, piloter l'actionneur, de manière à seulement exercer des pressions de poussée sur le percuteur, lesquelles pressions de poussée permettent de faire passer ledit percuteur de la position de repli à la position avancée,
- en usage, seule la pression exercée sur le percuteur par la zone du corps du joueur permet de faire passer ledit percuteur de la position avancée à la position de repli.

Le percuteur vient maintenant impacter directement la zone du corps du joueur. Il y a donc un contact physique direct entre le percuteur et le corps du joueur, contrairement à certains dispositifs de l'art antérieur où au moins une paroi fait l'interface entre ledit percuteur et ledit corps. Pour un ressentie équivalent, la force d'impacte du percuteur et sa course peuvent être diminuées, de sorte que l'actionneur peut être de taille plus réduite. Le dispositif selon l'invention est ainsi plus compact et moins onéreux que ceux connus de l'art antérieur précité. De plus, la méthode de commande présente plusieurs avantages. L'unité de gestion ne doit gérer que la sortie du percuteur de sorte que les ressources informatiques nécessaires à cette gestion sont réduites. En outre, lorsque la crosse n'est pas épaulée, le percuteur n'est pas repoussé vers la position de repli, le ressort maintenant ledit percuteur en position avancée. Donc même si l'unité de gestion pilote l'actionneur pour que celui-ci exerce une force de poussée, le percuteur ne bougera pas et restera en position avancée. Cela est particulièrement sécurisant pour le joueur dans la mesure où le percuteur ne se déplace pas lorsque la crosse n'est pas épaulée correctement. Il n'y a donc pas de risque que le percuteur vienne impacter de manière intempestive une autre zone du corps du joueur et/ou un autre équipement.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode avantageux de réalisation, dans la position de repli, le percuteur est escamoté dans le boitier de sorte qu'une face avant dudit percuteur soit située dans le même plan que la surface d'une partie arrière de la crosse contre laquelle, en usage, vient se plaquer l'épaule du joueur.
- Avantageusement, le percuteur est pourvu d'un ou plusieurs éléments de butée bloquant le mouvement dudit percuteur lorsqu'il atteint la position avancée.
- Avantageusement, le ou les éléments de butée sont réalisés dans un matériau rigide et viennent claquer contre une paroi arrière de la crosse lorsque le percuteur atteint la position avancée.
- Selon un mode de réalisation, l'unité de gestion électronique est adaptée pour détecter les fronts montants des signaux reçus par ladite unité et détermine, selon un paramétrage prédéfini, la période d'activation de l'actionneur.
- Selon un mode de réalisation, le paramétrage de la période d'activation peut dépendre de l'amplitude des signaux reçus par l'unité de gestion électronique, et éventuellement de la fréquence desdits signaux.
- Avantageusement, le percuteur est monté mobile en translation entre la position de repli et la position avancée.
- Dans une variante de réalisation, le percuteur est monté mobile en rotation entre la position de repli et la position avancée.
- Avantageusement, le dispositif comporte au moins l'une des caractéristiques suivantes : - l'actionneur est commandé pour exercer une force de poussée comprise entre 10 N et 100 N ; le débattement du percuteur entre la position de repli et la position avancée est compris entre 1 mm et 5 mm ; l'actionneur est un électro-piston.
- Selon un mode de réalisation, le support se présente sous la forme d'une canne, la crosse étant fixée de manière amovible sur ladite canne.

Encore un autre aspect de l'invention non couvert par les revendications concerne un accessoire de jeux vidéo de réalité virtuelle intégrant au moins un dispositif de retour de force conforme à l'une des caractéristiques précédentes.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue en perspective d'un support de manettes conforme à l'invention, le percuteur étant en position avancée,
- la figure 2 est une autre vue en perspective du support de manettes de la figure 1,
- la figure 3 est une vue schématique d'un dispositif de retour de force selon l'invention, le percuteur étant en position avancée,
- la figure 4 montre le dispositif de retour de force de la figure 3, avec le percuteur en position de repli,
- la figure 5 est une vue schématique d'un dispositif de retour de force selon une variante de réalisation,
- la figure 6 est un diagramme montrant un exemple de stratégie de pilotage de l'actionneur en fonction des signaux reçus.

### Modes préférés de réalisation de l'invention.

L'invention met en œuvre une ou plusieurs applications informatiques exécutées par le dispositif de retour de force. Par souci de clarté, il faut comprendre au sens de l'invention que « *le dispositif fait quelque chose* » signifie « *l'application informatique exécutée par le processeur ou microprocesseur du dispositif fait quelque chose* ». Tout comme « *l'application informatique fait quelque chose* » signifie « *l'application informatique exécutée par le processeur ou microprocesseur du dispositif fait quelque chose ».*

Encore par souci de clarté, la présente invention peut faire référence à un ou plusieurs « *processus informatiques logiques* ». Ces derniers correspondent aux actions ou résultats obtenus par l'exécution d'instructions de différentes applications informatiques. Aussi, il faut également comprendre au sens de l'invention que « *un processus informatique logique est adapté pour faire quelque chose* » signifie « *les instructions d'une application informatique exécutées par un processeur ou microprocesseurs font quelque chose ».*

Encore par souci de clarté, les précisions suivantes sont apportées à certains termes utilisés dans la description et les revendications :
- « Ressource informatique » peut être compris de façon non limitative comme : composant, matériel, logiciel, fichier, connexion à un réseau informatique, quantité de mémoire RAM, espace de disque dur, bande passante, vitesse de processeur, nombre de CPU, hardware, etc.
- « Logiciel » peut être compris comme : application informatique, programme informatique ou software.
- « Unité de gestion électronique » peut être compris de façon non limitative comme : processeur, microprocesseur, CPU (pour Central Processing Unit).
- « Jeu vidéo » peut être compris comme un jeu électronique doté d'une interface utilisateur permettant une interaction humaine ludique ou non ludique (ex : simulation d'entrainement au tir) en générant un retour visuel sur un dispositif vidéo (écran, casque, lunette, ...).
- « A et/ou B » signifie : A seul ou B seul ou A+B.

Le dispositif de retour de force selon l'invention est destiné à équipé un accessoire de jeu vidéo. Cet accessoire peut être une manette (contrôleur de jeu), un support de manette (simulant une arme telle qu'un pistolet, un fusil d'assaut ou une épée, un club de golf, une raquette de tennis, une canne à pêche), un vêtement, etc.

Le dispositif permet de simuler un impact physique lors d'un événement de jeu vidéo virtuel ou non virtuel. Il permet par exemple de simuler le recul d'une arme au moment d'une pression de détente (ex : dans le cas d'un pistolet ou d'un fusil d'assaut), un contact avec un autre objet virtuel (ex : un contact avec l'épée d'un adversaire, ou avec une balle de golf ou de tennis, la prise d'un poisson par une canne à pêche, ...), un impact de balles (ex : dans le cas d'un vêtement intégrant un ou plusieurs dispositifs de retour de force).

Par souci de clarté et de concision, la suite de la description décrit le dispositif de retour de force associé à un support de manette. Le même dispositif de retour de force peut bien évidemment être intégré dans un autre accessoire de jeu vidéo.

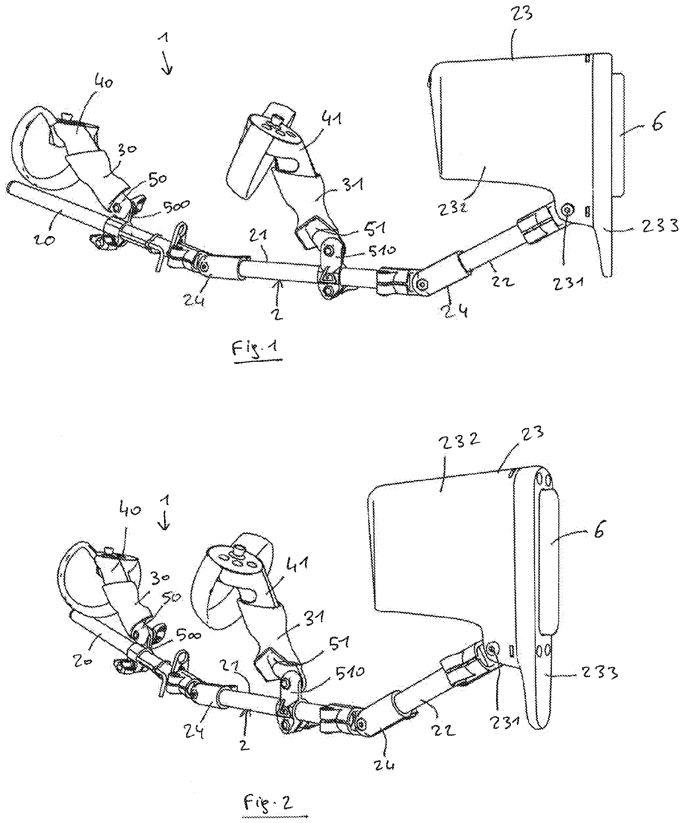

Sur les figures 1 et 2, le support 1 de manette se présente sous la forme d'une canne. Cette canne 2 simule un objet dans un environnement virtuel de jeu vidéo, notamment un fusil, mais également d'autres objets tels qu'une arme de poing, épée, bâton, club de golf, canne à pêche, etc. En d'autres termes, la canne 2 forme un objet simulé virtuel. Dans un environnement de réalité virtuelle, le joueur ne voit pas ce qu'il a entre les mains. Un simple support permettant de maintenir les manettes dans un alignement paraît amplement suffisant.

La canne 2 peut être droite, courbée ou se présenter sous la forme d'une ligne brisée. Elle a notamment pour fonction de relier physiquement les manettes entre elles et de les maintenir dans un certain alignement.

Selon le mode préféré de réalisation illustré sur les figures 1 et 2, la canne 2 présente quatre portions 20, 21, 22, 23 articulées entre-elles : une portion avant 20, une portion de milieu 21, une portion arrière 22 et une crosse 23. Un avantage lié à l'emploi d'une canne 2 articulée est que celle-ci peut être aisément pliée, et que dans cet état plié, le support 1 a un encombrement réduit de sorte qu'il puisse être facilement rangé et/ou transporté. En outre, le joueur a la possibilité de conformer la canne 2 pour l'adapter à sa morphologie et/ou au type d'objet simulé virtuel utilisé dans le jeu vidéo.

Les portions avant 20, de milieu 21 et arrière 22 se présentent avantageusement sous la forme de tubes rigides, réalisés en métal, plastique, bois, carbone, etc. Les tubes peuvent être cylindriques, de section ronde, ovale, carrée, rectangulaire, etc. Leur longueur est par exemple comprise entre 15 cm et 30 cm et leur diamètre externe par exemple compris entre 1 cm et 5 cm. Ces portions peuvent avoir la même longueur ou des longueurs différentes.

Les portions 20, 21 et 22 sont avantageusement reliées entre elles au moyen de raccords de tube articulés 24 à deux jonctions. Ces raccords 24 forment chacun une liaison pivot d'axe horizontal. Les articulations des raccords 24 sont préférentiellement crantées de sorte que le joueur puisse régler la conformation de la canne 2 à convenance puis bloquer en position les portions 20, 21 et 22 une fois la conformation réalisée.

La crosse 23 peut être réalisée dans le même matériau que les portions articulées 20, 21, 22, 23 ou dans un matériau différent. Pour en simplifier la conception, elle est obtenue par moulage plastique. Sur les figures 1 et 2, cette crosse 23 est montée sur une articulation 231. Le corps principal 232 de la crosse 23 est orientée selon la même direction que la canne 2, vers la portion avant 20. La partie arrière 233 est destinée à venir en appui contre l'épaule du joueur et la branche 232 forme un appui-joue particulièrement utile au joueur lorsqu'il veut ajuster un tir.

L'articulation 231 forme une liaison pivot d'axe horizontal autorisant une rotation de la crosse 23 par rapport à l'axe de la canne 2. Par « axe de la canne », on entend ici l'axe longitudinal de la canne 2 lorsque celle-ci est rectiligne, ou l'axe longitudinal de la portion arrière 22 lorsque ladite canne n'est pas rectiligne. L'articulation 231 se présente préférentiellement sous la forme d'une articulation crantée permettant au joueur de régler l'inclinaison de la crosse 23 à convenance puis de la bloquer en position une fois ce réglage effectué. En tout état de cause, la crosse 23 est fixée de manière amovible sur la canne 2 de manière à ce que le joueur puisse l'enlever ou la changer en cas de besoin.

Le support 1 est pourvu de deux logements 30, 31 adaptés pour recevoir chacun une manette 40, 41. Ces logements 30, 31 peuvent être réalisés en métal, plastique, carbone, etc. Sur les figures 1 et 2, ils sont disposés sur les portions avant 20 et de milieu 21 de la canne 2.

Les manettes 40, 41 sont de type connu. Elles comprennent généralement un joystick ou pavé tactile pour les déplacements du joueur dans l'environnement virtuel, un ou plusieurs boutons et/ou gâchettes permettant de déclencher des actions dans cet environnement et notamment la pose/dépose d'objets, prise de vue, pointage, tir, etc. Différents capteurs de mouvement et/ou de position sont disposés sur une couronne solidaire du manche de la manette. Elles sont par exemple commercialisées par la société OCULUS^{®} sous la marque OCULUS TOUCH^{®} ou par la société VIVE^{®}. Les documents brevets USD780807, US2017262048 ou encore US2016361637 divulguent également ce type de manette. L'homme du métier pourra se référer à ces documents en cas de besoin.

Chaque logement 30, 31 a la forme d'une coupe ou coupelle dans laquelle s'emboîte le manche de la manette 40, 41. Cet emboîtement se fait selon l'axe du manche, et de manière générale selon un mouvement du haut vers le bas. Les dimensions internes du logement 30, 31 sont ajustées à celles du manche de sorte que ledit manche soit maintenu en position assez fermement. Les dimensions internes du logement 30, 31 sont adaptées au modèle de manettes utilisé par le joueur (VIVE^{®}, OCULUS RIFT^{®}, ACER^{®}, LENOVO^{®}, et SAMSUNG^{®}, HP^{®}, DELL^{®}), de sorte que le manche s'engage avec un ajustement serré dans ledit logement 30, 31. On peut donc prévoir un logement spécifique par modèle de manette. Pour améliorer le maintien en position du manche dans le logement 30, 31, les parois internes de ce dernier sont avantageusement recouvertes d'un revêtement du type de caoutchouc ou silicone, assurant une adhérence supplémentaire.

Chaque logement 30, 31 est solidarisé à la canne 2 par l'intermédiaire d'un tenon 50, 51. Ces tenons 50, 51 font saillie vers le haut de la canne 2 de sorte que ladite canne se retrouve positionnée sous les manettes 40, 41. Les capteurs/émetteurs portés par les couronnes sont ainsi parfaitement découverts lorsque les manettes 40, 41 sont emboîtées dans leur logement 30, 31 respectif, aucun élément du support 1 ne venant les occulter.

Avantageusement, chaque tenon 50, 51 est monté sur une articulation 500, 510 autorisant une rotation du logement 30, 31 dans un plan passant par l'axe de la canne 2, et de fait une rotation de la manette 40, 41. Par « axe de la canne », on entend ici l'axe longitudinal de la canne 2 lorsque celle-ci est rectiligne ou, lorsque ladite canne n'est pas rectiligne, l'axe longitudinal de la portion 20, 21 sur laquelle est disposé le logement 30, 31. Le joueur a ainsi la possibilité de régler de manière précise l'inclinaison de chaque manette 40, 41, par exemple pour optimiser la précision d'un tir.

Avantageusement, les logements 30, 31 sont préhensibles et s'engagent de manière amovible sur les tenons 50, 51. Pour désengager une manette 40, 41 de la canne 2, le joueur doit donc la manipuler en saisissant le logement dans lequel elle est emboîtée, lequel logement se substitue alors au manche de ladite manette. Pour améliorer la préhension des logements 30, 31, leur paroi externe peut être conformée de manière ergonomique pour s'adapter à la main du joueur. Préférentiellement, c'est une liaison magnétique exerçant une force magnétique qui assure le maintien en position du logement 30, 31 sur le tenon 50, 51.

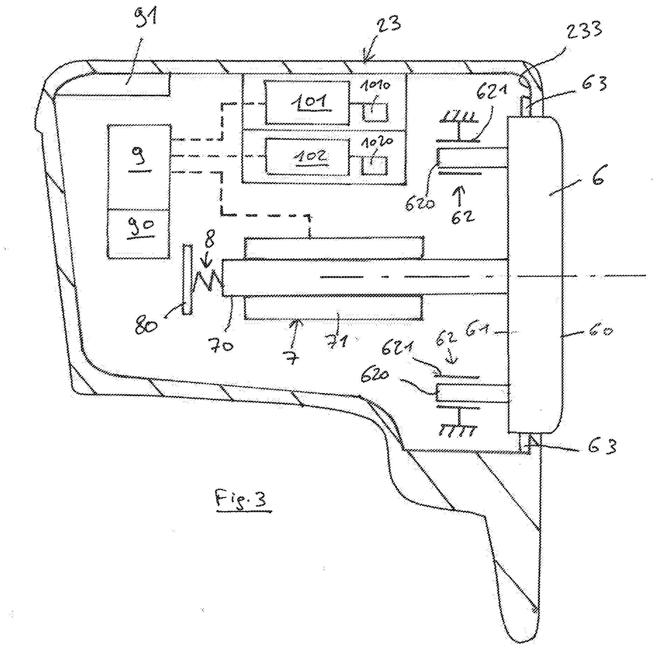

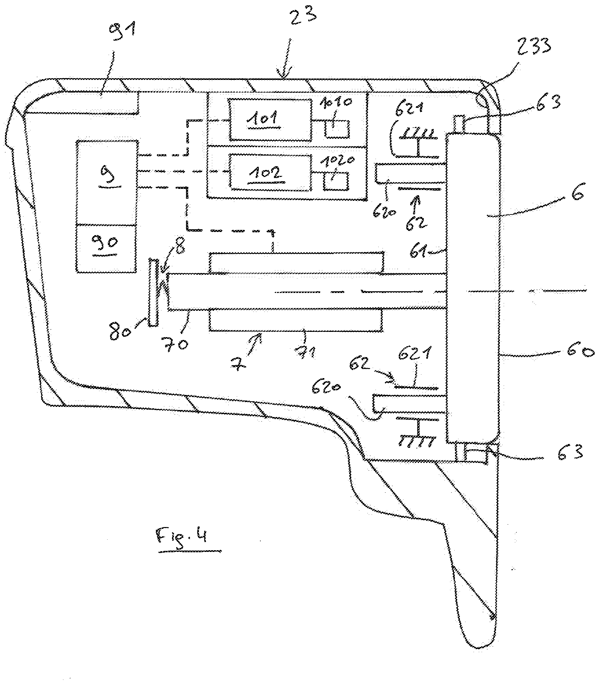

En se rapportant aux figures 3 et 4, la crosse 23 forme un boîtier dans lequel sont logés les différents éléments du dispositif de retour de force. La crosse 23 est conformée pour être épaulée par un joueur. En usage, elle est donc en contact physique avec une zone du corps du joueur, laquelle zone est ici l'épaule. Par « contact physique » on entend un contact avec la peau du joueur ou un contact avec un ou plusieurs vêtements portés par celui-ci.

Conformément à l'invention, un percuteur 6 est monté mobile dans la crosse 23 entre : - une position de repli (figure 4) et ; - une position avancée (figures 1 à 3) où il fait saillie de ladite crosse pour venir physiquement impacter l'épaule du joueur.

Pour simplifier la conception et réduire les coûts, le percuteur 6 a une forme générale rectangulaire. Il a une face avant 60 et une face arrière 61. La face avant (ou face active impactant la zone du corps du joueur) est préférentiellement plane, mais peut être convexe et/ou présenter un ou plusieurs éléments en reliefs conformés de manière à améliorer le ressentie du joueur lors de l'impact du percuteur 6 sur son épaule. A titre d'exemple, le percuteur 6 a une longueur comprise entre 1 cm et 15 cm, une largeur comprise entre 5 mm et 3 cm et une hauteur comprise entre 5 mm et 2 cm. Le percuteur 6 est réalisé par moulage ou injection plastique de type PETG, PLEA, ABS, etc. Il peut toutefois être réalisé en métal ou dans un matériau plus souple type caoutchouc de façon à amortir l'impact.

Le percuteur 6 est inséré dans un logement de forme complémentaire aménagé dans la crosse 23. Ce logement présente une ouverture débouchant à l'extérieur de la crosse 23 et par laquelle le percuteur 6 sort vers la position avancée.

Le percuteur 6 est pourvu d'un ou plusieurs éléments de butée 63 bloquant le mouvement dudit percuteur lorsqu'il atteint la position avancée. Ces éléments de butée 63 viennent en contact avec la paroi arrière 233 de la crosse 23. Sur les figures 3 et 4, les éléments de butée 63 sont disposés sur les faces latérales du percuteur 6, et peuvent consister en des pièces rapportées ou contraire être directement moulées ou usinées sur le corps principal dudit percuteur. Les butées 63 peuvent être réalisées dans un matériau rigide, type PETG, PLEA, ABS, etc. Cela permet d'entendre « claquer » les butées 63 contre la paroi arrière 233 lorsque le percuteur atteint la position avancée, ce claquement étant une source supplémentaire de stimulus auditif pour le joueur. Au contraire, si ce claquement n'est pas souhaité, les butées 63 et/ou la zone de contact de la paroi arrière 233 peuvent être réalisées dans un matériau souple du type caoutchouc.

Sur les figures annexées, le percuteur 6 est agencé dans la partie arrière de la crosse 23, c'est-à-dire celle contre laquelle vient se plaquer l'épaule du joueur. Dans la position de repli, le percuteur 6 peut être escamoté dans la crosse 23 de sorte que sa face avant soit située dans le même plan que la surface de cette partie arrière. Dans cette position de repli, on peut toutefois envisager que le percuteur fasse saillie de la crosse 23, sa face avant dépassant la surface de la partie arrière de ladite crosse. Cette dernière configuration est particulièrement avantageuse dans la mesure où lorsque le joueur épaule la crosse 23, le percuteur 6 est le premier élément qu'il sollicite, le faisant passer de la position avance vers la position de repli.

Dans la position avancée, la face avant 60 est située au-delà de la surface de la partie arrière de la crosse 23 de manière à pouvoir venir impacter physiquement l'épaule du joueur.

Pour simplifier encore la conception, le percuteur 6 est monté mobile en translation entre la position de repli et la position avancée. Un mouvement de translation est en effet le plus simple à gérer et permet d'employer des solutions techniques faciles à mettre en oeuvre. Un ou plusieurs moyens de guidage 62 assurent le guidage du percuteur 6. La face arrière 61 du percuteur 6 peut à cet effet être pourvue d'un ou plusieurs éléments cylindriques 620 montés coulissant dans des logements complémentaires 622 aménagés dans la crosse 23, l'ensemble formant glissière.

Un actionneur 7 assure le déplacement du percuteur 6 entre la position de repli et la position avancée. Cet actionneur 7 est préférentiellement un électro-piston. Ce type d'actionneur linéaire est particulièrement compacte, fiable et robuste, offre un temps de réponse court, et permet de générer une force de poussée en adéquation avec l'effet d'impact recherché. Sur les figures 3 et 4, l'électro-piston 7 comporte un piston (ou induit) 70 coulissant dans le corps d'une bobine magnétique 71 de forme complémentaire. Le corps de la bobine 71 est relié de manière fixe à la crosse 23 et entoure le piston 70. L'alimentation de la bobine 71 entraîne le déplacement par coulissement du piston 70. Ce dernier est solidarisé au percuteur 6, au niveau de sa face arrière 61. Le déplacement du piston 70 entraine de ce fait le déplacement du percuteur 6. La bobine 71 peut être commandée ou régulée en tension ou en courant.

De manière générale, l'actionneur 7 est piloté par une unité de gestion électronique 9. Cette dernière émet des informations de commande permettant de contrôler l'actionneur 7 pour générer au moins une force de poussée qui s'applique au percuteur 6. Entre la position de repli et la position avancée, cette force de poussée est avantageusement comprise entre 10 N (Newton) et 100 N. La demanderesse a pu constater qu'en deçà de 10 N, le ressentie du joueur lors de la simulation d'un impact physique était insuffisant. Et au-delà de 100 N, le percuteur 6 risque de blesser le joueur et/ou de former un hématome.

La crosse 23 intègre avantageusement une batterie 91, telle qu'une pile au lithium ou une pile solaire, qui assure l'alimentation électrique des composants du dispositif de retour de force. Cette alimentation électrique peut toutefois être directement assurée par un câble relié au secteur ou directement à un casque de réalité virtuelle.

Dans le cas où l'actionneur 7 est un électro-piston, l'unité de gestion 9 commande l'alimentation de la bobine 71. Il peut s'agir d'une commande de type tout-ou-rien ou une commande ajutée du type à modulation de largeur d'impulsions ou PWM (pour l'acronyme anglais Pulse Width Modulation).

La demanderesse a également constaté que les meilleurs résultats en termes de ressentie sont obtenus lorsque le débattement (ou course) du percuteur 6 entre la position de repli et la position avancée était compris entre 1 mm et 5 mm. En deçà de 1 mm, le joueur ne ressent pratiquement pas l'impact physique du percuteur 6 (surtout lorsqu'il porte des vêtements) et qu'au-delà de 5 mm, ledit percuteur s'engage trop profondément dans la zone du corps du joueur au risque de le gêner et/ou de le blesser.

Un élément ressort 8 est agencé pour maintenir le percuteur 6 en position avancée lorsque la crosse 23 n'est pas épaulée, ou, de manière plus générale lorsque le boîtier 23 n'est pas en contact physique avec une zone du corps du joueur. Le percuteur 6 est ainsi naturellement en position avancée, que l'actionneur 7 soit ou non activé. Sur les figures 3 et 4, l'élément ressort 8 se présente sous la forme d'un ressort hélicoïdal en prise d'une part avec la tige du piston 70 et d'autre part avec un élément de butée 80. Le ressort 8 est agencé pour agir dans l'axe du piston 70 (et donc dans la direction de déplacement du percuteur 6), de sorte que les butées 63 soient maintenues en butée contre la paroi arrière 233 de la crosse 23. Dans cette configuration, lorsque le joueur épaule la crosse 23, son épaule exerce une pression sur le percuteur 6 qui repousse ledit percuteur en position de repli. Lorsque la crosse 23 n'est pas épaulée, le ressort 8 ramène le percuteur 6 en position avancée. L'élément de butée 80 peut avoir une position réglable de manière à pouvoir modifier la course du piston 70 et donc celle du percuteur 6. L'élément de butée 80 peut être réalisé dans un matériau rigide (ex : PETG, PLEA, ABS, ...) ou souple (ex : caoutchouc). Un des avantages liés à l'utilisation d'un matériau souple est de pouvoir réduire (ou étouffer) le bruit du piston 70 lorsque celui-ci est dans une position reculée et vient buter contre ledit élément 80. Cette position reculée du piston 70 correspond à la position de repli du percuteur 6.

L'unité de gestion 9 intègre un module de communication 90 adapté pour recevoir des signaux radiofréquences transmis sans fil à partir d'une console de jeu ou d'un PC utilisé pour jouer au jeu vidéo. Les signaux radiofréquences peuvent également provenir d'une interface électronique dédiée connectée à cette console de jeu ou ce PC. Les signaux radiofréquences peuvent encore provenir des contrôleurs de jeu et notamment des manettes 40, 41. Ces signaux sont émis lors d'événements de jeu vidéo tels qu'un tir émanant d'une arme virtuelle, ou d'une exposition virtuelle à proximité du joueur. Dans le but de simplifier la conception du module de communication 90, les signaux radiofréquences reçus sont préférentiellement des signaux utilisant un protocole Bluetooth. Toutefois, d'autres protocoles tels que : ISM, Wifi, ANT, ZIGBEE, InfraRouge.., pouvant être utilisés.

Dans une variante de réalisation, l'unité de gestion 9 est directement connectée de manière filaire avec la console de jeu, le PC, l'interface dédiée, les contrôleurs de jeu, le casque de réalité virtuelle et recevoir les signaux depuis ces appareils.

En réponse à la réception des signaux, l'unité de gestion 9 pilote l'actionneur 7. L'unité de gestion 9 détecte les fronts montants de ces signaux et détermine, selon un paramétrage prédéfini, la période d'activation de l'actionneur 7.

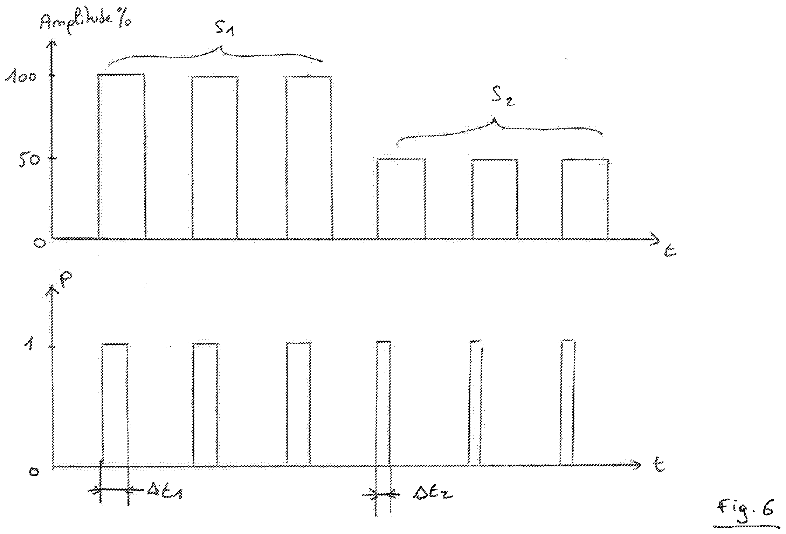

La figure 6 illustre un exemple de stratégie de pilotage de l'actionneur 7 en fonction des signaux reçus par l'unité de gestion 9. Le diagramme du haut montre un exemple de signaux reçus par l'unité de gestion 9. Les ordonnées correspondent à l'amplitude des signaux reçus (0%-100%) et les abscisses correspondent au temps. Le diagramme du bas illustre les consignes de pilotage de l'actionneur 7 qui sont émises par l'unité de gestion 9. Les ordonnées correspondent à l'activation de l'actionneur (0-1) et les abscisses correspondent au temps.

En se rapportant au diagramme du haut, une première série S1 de signaux est reçue par l'unité de gestion 9. Cette première série correspond à un premier événement de jeu (ex : utilisation d'une mitrailleuse virtuelle de gros calibre). Ces signaux ont une amplitude de 100 %. L'unité de gestion 9 détermine par exemple que la période d'activation Δt1 est de 0,80 ms lorsque l'amplitude du signal est de 100%.

Les signaux de la seconde série S2 ont une amplitude de 50 %. Cette seconde série correspond à un second événement de jeu (ex : utilisation d'une mitrailleuse virtuelle de petit calibre). L'unité de gestion 9 détermine par exemple que la période d'activation Δt2 est de 0,30 ms lorsque l'amplitude du signal est de 50%.

La demanderesse a constaté que la durée de la période d'activation Δt de l'actionneur 7 est proportionnelle à la valeur de la force de poussée. Dans las précédemment, comme Δt1 > Δt2, la force de poussée de l'actionneur 7 est plus importante lorsque l'unité de gestion reçoit les signaux de la série S1 que celle obtenue avec les signaux de la série S2. La force de l'impact ressenti par le joueur varie donc en fonction de la nature d'événements de jeux.

Le paramétrage de la période d'activation dépend ici de l'amplitude des signaux reçus par l'unité de gestion 9. On peut toutefois envisager de prendre en compte un ou plusieurs autres paramètres de ces signaux, tel que leur fréquence par exemple.

L'actionneur 7 est avantageusement piloté pour exercer seulement une pression de poussée sur le percuteur 6 (à une fréquence déterminée) pour le faire passer de la position de repli à la position avancée. Et c'est la pression exercée sur le percuteur 6 par la zone du corps du joueur (l'épaule dans le cas de la crosse 23) qui permet de faire passer ledit percuteur de la position avancée à la position de repli. Cette méthode de commande présente plusieurs avantages. L'unité de gestion 9 ne doit gérer que la sortie du percuteur 6 (et non pas sa rentrée) de sorte que les ressources informatiques nécessaires à cette gestion sont réduites. En outre, lorsque la crosse 23 n'est pas épaulée, le percuteur 6 n'est pas repoussé vers la position de repli, le ressort 8 maintenant ledit percuteur en position avancée. Donc même si l'unité de gestion 9 pilote l'actionneur 7 pour que celui-ci exerce une force de poussée, le percuteur 6 ne bougera pas et restera en position avancée. Cela évite au joueur d'entendre et/ou de ressentir « claquer » les butées 63 contre la paroi arrière 233 lorsque la crosse 23 n'est pas épaulée. Cela est également plus sécurisant pour le joueur dans la mesure où le percuteur 6 ne se déplace pas lorsque la crosse 23 n'est pas épaulée correctement. Il n'y a donc pas de risque que le percuteur 6 vienne impacter de manière intempestive une autre zone du corps du joueur et/ou un autre équipement, notamment son casque de réalité virtuelle.

Dans une variante de réalisation non couverte par les revendications, on peut toutefois envisager que l'actionneur 7 exerce non seulement une pression de poussée sur le percuteur 6 pour le faire passer de la position de repli à la position avancée, mais également une pression de tirage pour faire passer ledit percuteur de la position avancée à la position de repli.

Comme illustré sur les figures 3 et 4, la crosse 23 peut également intégrer un ou plusieurs actionneurs vibrants 101, 102 adaptés pour générer des vibrations dans des gammes de fréquences et/ou d'amplitudes identiques ou différentes. Un premier actionneur vibrant 101 peut par exemple générer des vibrations faibles (ou agréables) à une première gamme de fréquences et/ou d'amplitudes et le second actionneur vibrant 102 des vibrations plus forte (ou désagréables) à une seconde gamme de fréquences et/ou d'amplitudes. Ces actionneurs vibrants permettent de délivrer au joueur des messages de type « secousses » ou « buzz ». Les actionneurs vibrants 101, 102 peuvent être activés simultanément ou alternativement selon les événements de jeu vidéo. Ces actionneurs vibrants 101, 102 sont du type connus, et consistent par exemple en un moteur électrique dont l'arbre de rotation est pourvu d'une masselotte ou balourd 1010, 1020. Les actionneurs vibrants 101, 102 sont pilotés par l'unité de gestion 9. Ce pilotage est effectué en réponse à la réception de signaux qui peuvent être les mêmes que ceux initiant le pilotage de l'actionneur 7 ou des signaux différents émis durant d'autres événements de jeu vidéo.

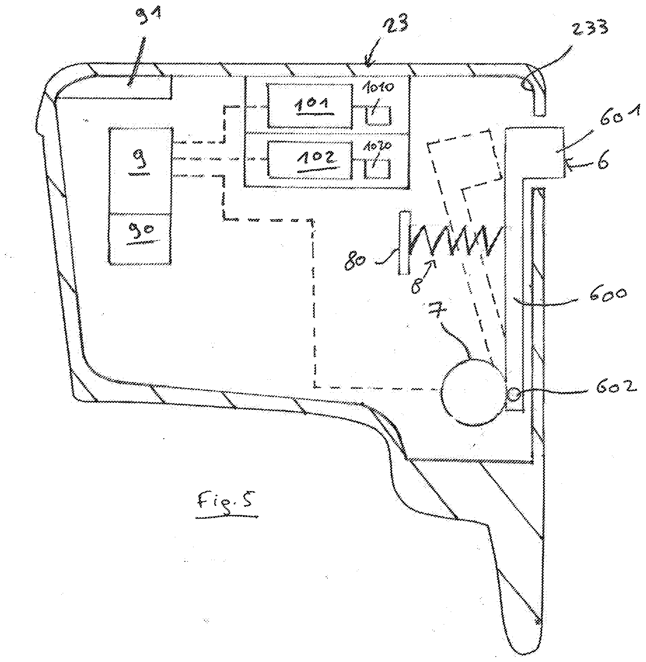

La figure 5 illustre une variante de réalisation où le percuteur 6 est monté mobile en rotation entre la position de repli (trait pointillés) et la position avancée (trait plein). Le percuteur 6 se présente ici sous la forme d'un marteau comportant une portion longitudinale 600 à l'extrémité duquel est aménagée une portion active 601 destinée à venir impacter la zone du corps du joueur. L'autre extrémité de la portion longitudinale 600 est pourvue d'un axe de rotation 602. L'actionneur 7 est ici un actionneur rotatif (par exemple un moteur électrique rotatif) dont l'arbre est en prise avec l'axe de rotation 602. La mise en rotation de l'actionneur 7 par l'unité de gestion 9 entraîne le pivotement du percuteur 6 autour de l'axe 602, entre la position de repli et la position avancée. On peut toutefois envisager d'utiliser un actionneur linéaire 7 du type décrit précédemment en référence aux figures 3 et 4, par exemple avec le piston 70 en prise avec la portion longitudinale 600. Le ressort 8 est agencé pour maintenir le percuteur 6 en position avancée lorsque la crosse 23 n'est pas épaulée. Il est en prise d'une part avec le percuteur 6 et d'autre part avec l'élément de butée 80

Comme évoqué précédemment, le dispositif de retour de force décrit en référence aux figures annexées, peut être intégré dans d'autres accessoires de jeu vidéo. Il peut notamment être intégré dans une manette ou contrôleur de jeu. Dans le cas d'une manette 40, 41 illustrée sur les figures 1 et 2, le manche de ladite manette forme le boîtier dans lequel est monté le percuteur. Ce dernier vient alors impacter la paume de la main du joueur.

On peut également concevoir un vêtement adapté pour être porté par le joueur (par exemple un t-shirt, un pantalon, une combinaison, ...) intégrant plusieurs dispositifs de retour de force. Les boîtiers sont alors directement intégrés dans la maille du vêtement ou dans son épaisseur. Plusieurs dispositifs de retour de force répartis sur le vêtement permettent de spatialiser plusieurs impacts de balles lorsque les percuteurs sont en position avancée.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes. En particulier :
- Le boîtier peut être réalisé en une ou plusieurs pièces. Il est particulièrement avantageux de prévoir un boîtier avec au moins une partie amovible autorisant l'accès aux différents éléments installés à l'intérieur dudit boîtier. Sur les figures annexées, la partie arrière 233 de la crosse 23 est préférentiellement amovible.
- Le percuteur 6 peut avoir une forme générale carrée, sphérique, etc.
- L'électro-piston 7 peut être remplacé par un autre actionneur linéaire tel qu'un vérin mécanique ou pneumatique. Dans ce dernier cas, le boîtier 23 peut intégrer une réserve d'air comprimé permettant de déplacer le piston 70.
- Le piston 70 peut être déplacé par un moteur électrique rotatif. On prévoit alors un système de dentures/pignons permettant de transformer le mouvement rotatif de l'arbre du moteur en un mouvement de translation du piston 70.
- Le ressort 8 peut être en prise d'une part avec le percuteur 6 (et non pas avec la tige du piston 70) et d'autre part avec l'élément de butée 80.
- L'élément de butée bloquant le mouvement du percuteur 6 lorsqu'il atteint la position avancée peut être positionné directement dans l'électro-piston 7 de manière à ce que le déplacement du piston 70 soit directement bloqué par une butée aménagée dans le corps de la bobine 71. On peut également prévoir un élément de butée sur le percuteur 6 et un autre élément de butée dans l'électro-piston 7,
- La face active 60 du percuteur 6 peut être recouverte de mousse ou d'un autre matériau similaire de type caoutchouc ou silicone pour amortir l'impacte dudit percuteur sur la zone du corps du joueur.

## Revendications

1. Support de manette (40, 41) pour jeux vidéo de réalité virtuelle, lequel support (1) est adapté pour simuler une arme dans ledit jeu, lequel support est équipé d'un dispositif de retour de force mécanique conçu pour simuler le recul de l'arme au moment d'une pression de détente lors d'un événement de jeu,
- le dispositif de retour de force comporte :
∘ un boîtier (23) qui, en usage, est en contact physique avec une zone du corps du joueur, lequel boîtier se présente sous la forme d'une crosse (23) conformée pour être épaulée par un joueur,
o un percuteur (6) formant, en usage, un contact physique avec la zone du corps du joueur,
**caractérisé en ce que** :
- le percuteur (6) est monté mobile dans le boîtier (23) entre :
o une position de repli et,
o une position avancée où ledit percuteur fait saillie dudit boîtier pour, en usage, venir impacter la zone du corps du joueur,
- un élément ressort (8) est agencé pour maintenir le percuteur (6) en position avancée lorsque le boîtier (23) n'est pas en contact physique avec la zone du corps du joueur,
- un actionneur (7) est agencé pour déplacer le percuteur (6) entre la position de repli et la position avancée,
- une unité de gestion électronique (9) est adaptée pour recevoir des signaux et, en réponse à la réception desdits signaux, piloter l'actionneur (7), de manière à seulement exercer des pressions de poussée sur le percuteur (6), lesquelles pressions de poussée permettent de faire passer ledit percuteur de la position de repli à la position avancée,
- en usage, seule la pression exercée sur le percuteur (6) par la zone du corps du joueur permet de faire passer ledit percuteur de la position avancée à la position de repli.

2. Support selon la revendication 1, dans lequel dans la position de repli, le percuteur est escamoté dans le boitier (23) de sorte qu'une face avant dudit percuteur soit située dans le même plan que la surface d'une partie arrière de la crosse (23) contre laquelle, en usage, vient se plaquer l'épaule du joueur.

3. Support selon l'une des revendications précédentes, dans lequel le percuteur (6) est pourvu d'un ou plusieurs éléments de butée (63) bloquant le mouvement dudit percuteur lorsqu'il atteint la position avancée.

4. Support selon la revendication 3, dans lequel le ou les éléments de butée (63) sont réalisés dans un matériau rigide et viennent claquer contre une paroi arrière (233) de la crosse (23) lorsque le percuteur (6) atteint la position avancée.

5. Support selon l'une des revendications précédentes, dans lequel laquelle l'unité de gestion électronique (9) est adaptée pour détecter les fronts montants des signaux reçus par ladite unité et détermine, selon un paramétrage prédéfini, la période d'activation de l'actionneur (7).

6. Support selon la revendication 5, dans lequel le paramétrage de la période d'activation dépend de l'amplitude des signaux reçus par l'unité de gestion électronique (9).

7. Support selon la revendication 6, dans lequel le paramétrage de la période d'activation dépend de la fréquence des signaux reçus par l'unité de gestion électronique (9).

8. Support selon l'une des revendications précédentes, dans lequel le percuteur (6) est monté mobile en translation entre la position de repli et la position avancée.

9. Support selon l'une des revendications 1 à 4, dans lequel le percuteur (6) est monté mobile en rotation entre la position de repli et la position avancée.

10. Support selon l'une des revendications précédentes, comportant au moins l'une des caractéristiques suivantes :
- l'actionneur (7) est commandé pour exercer une force de poussée comprise entre 10 N et 100 N ;
- le débattement du percuteur (6) entre la position de repli et la position avancée est compris entre 1 mm et 5 mm ;
- l'actionneur (7) est un électro-piston.

11. Support selon l'une des revendications précédentes, dans lequel ledit support (1) se présente sous la forme d'une canne (2), la crosse (23) étant fixée de manière amovible sur ladite canne.

## Patentansprüche

1. Controller-Halterung (40, 41) für Virtual-Reality-Videospiele, wobei die Halterung (1) dazu ausgebildet ist, eine Waffe in dem Spiel zu simulieren, wobei die Halterung mit einer mechanischen Kraftrückkopplungsvorrichtung ausgestattet ist, die dazu ausgelegt ist, den Rückstoß der Waffe zum Zeitpunkt eines Abzugs während eines Spielereignisses zu simulieren,
- wobei die Kraftrückkopplungsvorrichtung Folgendes umfasst:
∘ ein Gehäuse (23), das bei Gebrauch in physischem Kontakt mit einem Bereich des Körpers des Spielers steht, wobei das Gehäuse die Form eines Schafts (23) hat, der so geformt ist, dass er von einem Spieler geschultert werden kann,
∘ eine Schlagvorrichtung (6), die bei Gebrauch einen physischen Kontakt mit dem Bereich des Körpers des Spielers bildet,
**dadurch gekennzeichnet, dass**:
- die Schlagvorrichtung (6) im Gehäuse (23) beweglich montiert ist zwischen:
∘ einer Rückzugsposition und
∘ einer vorgeschobenen Position, in der die Schlagvorrichtung aus dem Gehäuse herausragt, um bei Gebrauch eine Auswirkung auf den Bereich des Körpers des Spielers zu haben,
- ein Federelement (8) so angeordnet ist, dass es die Schlagvorrichtung (6) in einer vorgeschobenen Position hält, wenn das Gehäuse (23) nicht in physischem Kontakt mit dem Bereich des Körpers des Spielers steht,
- eine Betätigungsvorrichtung (7) so angeordnet ist, dass sie die Schlagvorrichtung (6) zwischen der Rückzugsposition und der vorgeschobenen Position verlagert,
- eine elektronische Steuereinheit (9) dazu ausgebildet ist, Signale zu empfangen und in Reaktion auf den Empfang der Signale die Betätigungsvorrichtung (7) derart anzusteuern, dass nur Schubdrücke auf die Schlagvorrichtung (6) ausgeübt werden, wobei die Schubdrücke es ermöglichen, die Schlagvorrichtung aus der Rückzugsposition in die vorgeschobene Position zu bewegen,
- bei Gebrauch die Schlagvorrichtung (6) nur durch den Druck, der durch den Bereich des Körpers des Spielers auf die Schlagvorrichtung (6) ausgeübt wird, von der vorgeschobenen Position in die Rückzugsposition bewegt wird.

2. Halterung nach Anspruch 1, wobei die Schlagvorrichtung in der Rückzugsposition derart in das Gehäuse (23) versenkt ist, dass eine Vorderseite der Schlagvorrichtung in derselben Ebene liegt wie die Oberfläche eines hinteren Teils des Schafts (23), gegen den die Schulter des Spielers bei Gebrauch anliegt.

3. Halterung nach einem der vorhergehenden Ansprüche, wobei die Schlagvorrichtung (6) mit einem oder mehreren Anschlagelementen (63) versehen ist, die die Bewegung der Schlagvorrichtung blockieren, wenn sie die vorgeschobene Position erreicht.

4. Halterung nach Anspruch 3, wobei das oder die Anschlagelemente (63) aus einem starren Material bestehen und gegen eine Rückwand (233) des Schafts (23) schlagen, wenn die Schlagvorrichtung (6) die vorgeschobene Position erreicht.

5. Halterung nach einem der vorhergehenden Ansprüche, wobei die elektronische Steuereinheit (9) dazu ausgebildet ist, die ansteigenden Flanken der von der Einheit empfangenen Signale zu erfassen, und gemäß einer vordefinierten Einstellung die Aktivierungsperiode der Betätigungsvorrichtung (7) bestimmt.

6. Halterung nach Anspruch 5, wobei die Einstellung der Aktivierungsperiode von der Amplitude der von der elektronischen Steuereinheit (9) empfangenen Signale abhängt.

7. Halterung nach Anspruch 6, wobei die Einstellung der Aktivierungsperiode von der Frequenz der von der elektronischen Steuereinheit (9) empfangenen Signale abhängt.

8. Halterung nach einem der vorhergehenden Ansprüche, wobei die Schlagvorrichtung (6) zwischen der Rückzugsposition und der vorgeschobenen Position translatorisch beweglich montiert ist.

9. Halterung nach einem der vorhergehenden Ansprüche, wobei die Schlagvorrichtung (1) zwischen der Rückzugsposition und der vorgeschobenen Position rotierend beweglich montiert ist.

10. Halterung nach einem der vorhergehenden Ansprüche, die mindestens eines der folgenden Merkmale umfasst:
- die Betätigungsvorrichtung (7) wird so gesteuert, dass sie eine Schubkraft zwischen 10 N und 100 N ausübt;
- der Federweg der Schlagvorrichtung (6) zwischen der Rückzugsposition und der vorgeschobenen Position beträgt zwischen 1 mm und 5 mm;
- die Betätigungsvorrichtung (7) ist ein Elektrokolben.

11. Halterung nach einem der vorhergehenden Ansprüche, wobei die Halterung (1) in Form eines Rohrs (2) vorliegt und der Schaft (23) abnehmbar an dem Rohr befestigt ist.

## Claims

1. Controller bracket (40, 41) for virtual reality video games, which bracket (1) is designed to simulate a weapon in said game, which bracket is equipped with a mechanical force feedback device designed to simulate the recoil of the weapon as the trigger is pulled during a game event,
- the force feedback device comprises:
∘ a casing (23) that, in use, is in physical contact with an area of the player's body, which casing is in the form of a stock (23) shaped to be shouldered by a player,
∘ a striker (6) forming, in use, physical contact with the area of the player's body,
**characterised in that**:
- the striker (6) is movably mounted in the casing (23) between:
∘ a retracted position and,
∘ a forward position where said striker projects from said casing to, in use, impact the area of the player's body,
- a spring element (8) is arranged to hold the striker (6) in the forward position when the casing (23) is not in physical contact with the area of the player's body,
- an actuator (7) is arranged to move the striker (6) between the retracted position and the forward position,
- an electronic management unit (9) is designed to receive signals and, in response to reception of said signals, to operate the actuator (7), so as to exert only thrust pressures on the striker (6), which thrust pressures enable the said striker to be switched from the retracted position to the forward position,
- in use, only the pressure exerted on the striker (6) by the area of the player's body is used to switch said striker from the forward position to the retracted position.

2. Bracket according to claim 1, in which in the retracted position, the striker is retracted into the casing (23) such that a front face of the said striker is located in the same plane as the surface of a rear part of the stock (23) against which, in use, comes to press against the player's shoulder.

3. Bracket according to one of the preceding claims, in which the striker (6) is provided with one or more stop elements (63) blocking the movement of the said striker when it reaches the forward position.

4. Bracket according to Claim 3, in which the stop element(s) (63) are made of a rigid material and bang against a rear wall (233) of the stock (23) when the striker (6) reaches the forward position.

5. Bracket according to one of the preceding claims, in which the electronic management unit (9) is designed to detect the rising fronts of the signals received by said unit and determines, according to a predefined setting, the activation period of the actuator (7).

6. Bracket according to claim 5, in which the activation period setting depends on the amplitude of the signals received by the electronic management unit (9).

7. Bracket according to claim 6, in which the activation period setting depends on the frequency of the signals received by the electronic management unit (9).

8. Support according to one of the preceding claims, in which the striker (6) is mounted to move by translation between the retracted position and the forward position.

9. Bracket according to one of claims 1 to 4, in which the striker (6) is mounted to move by rotation between the retracted position and the forward position.

10. Bracket according to one of the preceding claims, incorporating at least one of the following characteristics:
- the actuator (7) is controlled to exert a thrust force of between 10 N and 100 N;
- the clearance of the striker (6) between the retracted position and the forward position is between 1 mm and 5 mm;
- the actuator (7) is an electro-piston.

11. Bracket according to one of the preceding claims, in which said bracket (1) is in the form of a rod (2), the stock (23) being removably fastened to the said rod.
